# EUROPEAN PATENT APPLICATION

(11) **EP 4 827 016 A1**
(43) Date of publication of application: **21.10.2026**
(21) Application number: 24902416.7
(22) Date of filing: 31.10.2024
(51) Int. Cl.: H04B 10/118

(54) **SIGNAL LIGHT SENDING METHOD AND APPARATUS, SIGNAL LIGHT RECEIVING METHOD AND APPARATUS, AND DEVICE AND MEDIUM**

(30) Priority: 14.12.2023 CN 202311724514
(71) Applicant: Shanghai Satellite Network Research Institute Co., Ltd., Shanghai 201204 (CN)
(72) Inventor: LAO, Chenzhe, Shanghai 201204 (CN); SUN, Jianfeng, Shanghai 201204 (CN); XU, Xiaofan, Shanghai 201204 (CN)
(74) Representative: Ipsilon
(86) International application number: PCT/CN2024/128885
(87) International publication number: WO 2025/123992

(57) **Abstract**

The present application relates to the technical field of space laser communications. Disclosed are a signal light sending method and apparatus, a signal light receiving method and apparatus, and a device and a medium. The method comprises: a sending satellite determining, on the basis of an inter-satellite link margin, the number of array groups matching the inter-satellite link margin, wherein the inter-satellite link margin represents the link quality between the sending satellite and a receiving satellite; on the basis of the number of array groups, grouping a micro-electro-mechanical system (MEMS) array to obtain M MEMS sub-arrays, M being an integer greater than 1; and if a first divergence angle of the M MEMS sub-arrays is greater than the radian of a receiving area of the receiving satellite, controlling the M MEMS sub-arrays to send signal light to the receiving satellite at the first divergence angle, wherein the receiving area is an area formed by means of the location of the receiving satellite and an error range of the location.

## Description

### Cross-Reference to Related Applications

The present disclosure claims priority to the Chinese patent application No. 202311724514.7, filed with China National Intellectual Property Administration on December 14, 2023, and entitled "SIGNAL LIGHT TRANSMITTING METHOD AND RECEIVING METHOD, APPARATUS, DEVICE, AND MEDIUM", the content of which is incorporated by reference herein.

### Technical Field

The present application relates to the field of space laser communication technology, and in particular to a signal light transmitting method and receiving method, apparatus, device, and medium.

### Background

Space laser communication uses light waves as a carrier for information transmission. Compared with traditional microwave communication, it has the advantages of high data rates, good concealment, lightweight and compact terminal, and low power consumption. Therefore, it has been widely studied by countries around the world and is expected to solve the bottleneck of current communication technology. However, space laser communication uses beacon light of milli-angular size or even micro-angular size order for communication. The requirements for the link establishment process, such as capturing and tracking, before communication, are very high. Early laser communication used beacon light with large beam divergence angle and coarse tracking mechanism to scan the location area of the counterpart terminal, and resulted in large size, large mass, and high power consumption of satellites.

In view of this, beaconless satellite laser communication capturing technology has been proposed, which mainly uses a signal light(s) (communication beam) instead of beacon light to scan the area where the counterpart terminal is located, thereby reducing the size, mass, power consumption, etc., of the satellite. However, the divergence angle of the signal light is generally small, only a few tens of micro-angular sizes, which results in the signal light transmitted out not being able to fully cover the counterpart terminal, reducing the probability and efficiency of the counterpart term receiving the signal light.

### Summary

The present application provides a signal light transmitting method, receiving method, apparatus, device, and medium, which are used to improve the probability and efficiency of the counterpart receiving the signal light.

In a first aspect, a signal light transmitting method is provided, including: determining, by a transmitting satellite, a quantity of array groups matching the inter-satellite link margin based on an inter-satellite link margin; where the inter-satellite link margin represents a link quality between the transmitting satellite and a receiving satellite; grouping a micro-electromechanical system (MEMS) array to obtain M quantity of MEMS sub-arrays based on the quantity of array groups, where M is an integer greater than 1; and controlling the M quantity of MEMS sub-arrays to transmit a signal light to the receiving satellite at the first divergence angle in response to that a first divergence angle of the M quantity of MEMS sub-arrays is greater than an angular size of a receiving area of the receiving satellite; where the receiving area is an area formed by a position of the receiving satellite and an error range of the position.

In the embodiment of the present application, firstly, the transmitting satellite can determine the quantity of array groups that matches the inter-satellite link margin based on the inter-satellite link margin, and group the MEMS array based on the quantity of array groups to obtain M quantity of MEMS sub-arrays, thereby achieving the purpose of expanding the divergence angle of the transmitted signal light; secondly, when the first divergence angle of the M quantity of MEMS sub-arrays is greater than the angular size of the receiving area of the receiving satellite, transmits the signal light to the counterpart (receiving satellite), further ensuring that the subsequently transmitted signal light can cover the receiving area of the counterpart, thereby improving the probability and efficiency of the counterpart receiving the signal light.

In some embodiments of the present application, the method further includes: adjusting pointing directions of the M quantity of MEMS sub-arrays to obtain a second divergence angle of the M quantity of MEMS sub-arrays in response to that the first divergence angle is less than or equal to the angular size of the receiving area; where the second divergence angle is greater than the angular size of the receiving area; and controlling the M quantity of MEMS sub-arrays to transmit a signal light to the receiving satellite at the second divergence angle.

In some embodiments of the present application, the method further includes: before transmitting the signal light to the receiving satellite, controlling a first phase shifter array to add a random interference signal to an original signal light to obtain the signal light; where an optical power of the signal light is evenly distributed.

In some embodiments of the present application, the method further includes: before transmitting the signal light to the receiving satellite, controlling a direction in which the M quantity of MEMS sub-arrays transmit the signal light to align with the receiving area based on a satellite ephemeris of the receiving satellite; where the satellite ephemeris includes orbital parameters of the receiving satellite.

In a second aspect, a signal light receiving method is provided, including: determining, by a receiving satellite a quantity of array groups matching the inter-satellite link margin based on an inter-satellite link margin; where the inter-satellite link margin represents a link quality between the receiving satellite and a transmitting satellite; grouping a micro-electromechanical system (MEMS) array to obtain N quantity of MEMS sub-arrays based on the quantity of array groups, where N is an integer greater than 1; and controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; where the transmitting area is an area formed by a position of the transmitting satellite and an error range of the position.

In the embodiment of the present application, firstly, the receiving satellite can determine the quantity of array groups that matches the inter-satellite link margin based on the inter-satellite link margin, and group the MEMS array according to the quantity of array groups to obtain N quantity of MEMS sub-arrays, thereby achieving the purpose of expanding the receiving angle of field of view of the received signal light; secondly, when the first receiving angle of field of view of the N quantity of MEMS sub-arrays is greater than the angular size of the transmitting area of the transmitting satellite, receives the signal light transmitted by the counterpart, thereby further improving the probability and efficiency of receiving the signal light.

In some embodiments of the present application, the method further includes: adjusting pointing directions of the N quantity of MEMS sub-arrays to obtain a second receiving angle of field of view of the N quantity of MEMS sub-arrays in response to that the first receiving angle of field of view is less than or equal to the angular size of the transmitting area; where the second receiving angle of field of view is greater than the angular size of the transmitting area; and controlling the N quantity of MEMS sub-arrays to receive at the second receiving angle of field of view the signal light transmitted by the transmitting satellite.

In some embodiments of the present application, the method further includes: before receiving the signal light transmitted by the transmitting satellite, controlling a direction in which the N quantity of MEMS sub-arrays receive the signal light to align with the transmitting area based on a satellite ephemeris of the transmitting satellite; where the satellite ephemeris includes orbital parameters of the transmitting satellite.

In some embodiments of the present application, receiving the signal light transmitted by the transmitting satellite includes: controlling a detector to detect an optical power of the signal light; and controlling phases of signal lights received by a second phase shifter array being the same based on the optical power of the signal light.

In some embodiments of the present application, the method further includes: after receiving the signal light transmitted by the transmitting satellite, controlling remaining MEMS sub-arrays among the N quantity of MEMS sub-arrays to rotate to the same pointing direction as the first MEMS sub-array in response to that the detector detects that an optical power of the signal light received by a first MEMS sub-array among the N quantity of MEMS sub-arrays meets a set threshold, and receiving the signal light transmitted by the transmitting satellite.

In a third aspect, a signal light transmitting apparatus is provided, including a controller and a MEMS array connected to the controller; the controller is configured for: determining a quantity of array groups matching the inter-satellite link margin based on an inter-satellite link margin; where the inter-satellite link margin represents a link quality between the transmitting satellite and a receiving satellite; grouping the MEMS array to obtain M quantity of MEMS sub-arrays based on the quantity of array groups, where M is an integer greater than 1; and controlling the M quantity of MEMS sub-arrays to transmit a signal light to the receiving satellite at the first divergence angle in response to that a first divergence angle of the M quantity of MEMS sub-arrays is greater than an angular size of a receiving area of the receiving satellite; where the receiving area is an area formed by a position of the receiving satellite and an error range of the position.

In some embodiments of the present application, the controller is further configured for: adjusting pointing directions of a unit set of the M quantity of MEMS sub-arrays to obtain a second divergence angle of the M quantity of MEMS sub-arrays in response to that the first divergence angle is less than or equal to the angular size of the receiving area; where the second divergence angle is greater than the angular size of the receiving area; and controlling the M quantity of MEMS sub-arrays to transmit a signal light to the receiving satellite at the second divergence angle.

In some embodiments of the present application, the apparatus further includes a first phase shifter array; and the controller is further configured for: controlling the first phase shifter array to add a random interference signal to an original signal light to obtain the signal light; where an optical power of the signal light is evenly distributed.

In some embodiments of the present application, the controller is further configured for: controlling a direction in which the M quantity of MEMS sub-arrays transmit the signal light to align with the receiving area based on a satellite ephemeris of the receiving satellite; where the satellite ephemeris includes orbital parameters of the receiving satellite.

In a fourth aspect, a signal light receiving apparatus is provided, including a controller and a MEMS array unit connected to the controller; and the controller is configured for: determining a quantity of array groups matching the inter-satellite link margin based on an inter-satellite link margin; where the inter-satellite link margin represents a link quality between the receiving satellite and a transmitting satellite; grouping the MEMS array to obtain N quantity of MEMS sub-arrays based on the quantity of array groups, where N is an integer greater than 1; controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; where the transmitting area is an area formed by a position of the transmitting satellite and an error range of the position.

In some embodiments of the present application, the controller is further configured for: adjusting pointing directions of the N quantity of MEMS sub-arrays to obtain a second receiving angle of field of view of the N quantity of MEMS sub-arrays in response to that the first receiving angle of field of view is less than or equal to the angular size of the transmitting area; where the second receiving angle of field of view is greater than the angular size of the transmitting area; and controlling the N quantity of MEMS sub-arrays to receive at the second receiving angle of field of view the signal light transmitted by the transmitting satellite.

In some embodiments of the present application, the controller is further configured for: controlling a direction in which the N quantity of MEMS sub-arrays receive the signal light to align with the transmitting area based on a satellite ephemeris of the transmitting satellite; where the satellite ephemeris includes orbital parameters of the transmitting satellite.

In some embodiments of the present application, the apparatus further includes a detector and a second phase shifter array; where the controller is further configured for: controlling the detector to detect an optical power of the signal light; and controlling phases of signal lights received by the second phase shifter array being the same based on the optical power of the signal light.

In some embodiments of the present application, the controller is further configured for: controlling remaining MEMS sub-arrays among the N quantity of MEMS sub-arrays to rotate to the same pointing direction as the first MEMS sub-array in response to that the detector detects that an optical power of the signal light received by a first MEMS sub-array among the N quantity of MEMS sub-arrays meets a set threshold, and receiving the signal light transmitted by the transmitting satellite.

In a fifth aspect, a signal light receiving apparatus is provided, the device including: determining the quantity of array groups matching the inter-satellite link margin based on the inter-satellite link margin; where the inter-satellite link margin represents the link quality between the receiving satellite and the transmitting satellite; grouping the MEMS array to obtain N quantity of MEMS sub-arrays based on the quantity of array groups, where N is an integer greater than 1; controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; where the transmitting area is an area formed by a position of the transmitting satellite and an error range of the position of the transmitting satellite.

In some embodiments of the present application, the controller is further configured for: determining the quantity of array groups matching the inter-satellite link margin based on the inter-satellite link margin; where the inter-satellite link margin represents the link quality between the receiving satellite and the transmitting satellite; grouping the MEMS array to obtain N quantity of MEMS sub-arrays based on the quantity of array groups, where N is an integer greater than 1; controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; where the transmitting area is an area formed by a position of the transmitting satellite and an error range of the position of the transmitting satellite.

In some embodiments of the present application, the controller is further configured for: controlling the first phase shifter array to add a random interference signal to an original signal light to obtain the signal light; where an optical power of the signal light is evenly distributed.

In a sixth aspect, a communication apparatus is provided, including: a memory for storing computer programs; and a processor for implementing the steps of the method described in any one of the first aspect or the second aspect when executing the computer programs stored in the memory.

In a seventh aspect, a computer-readable storage medium is provided, where a computer program is stored in the computer-readable storage medium, and when the computer program is executed by a processor, the steps of the method described in any one of the first aspect or the second aspect are implemented.

### Brief Description of Figures

FIG. 1 exemplarily shows a schematic diagram of an application scenario to which embodiments of the present application is applicable.
FIG. 2 exemplarily shows a schematic structural diagram of a signal light transceiver device provided in an embodiment of the present application.
FIG. 3 exemplarily shows a flow chart of a signal light transmitting method provided in an embodiment of the present application.
FIG. 4 exemplarily shows a representation diagram of a capture area and a receiving area provided in an embodiment of the present application.
FIG. 5 exemplarily shows a flow chart of a signal light receiving method provided in an embodiment of the present application.
FIG. 6 exemplarily shows a logic schematic diagram of a dual-satellite capture provided in an embodiment of the present application.
FIG. 7 exemplarily shows a schematic structural diagram of a signal light transmitting apparatus provided in an embodiment of the present application.
FIG. 8 exemplarily shows a schematic structural diagram of a signal light receiving apparatus provided in an embodiment of the present application.
FIG. 9 exemplarily shows a schematic structural diagram of a communication apparatus provided in an embodiment of the present application.

### Detailed Description

In order to make the purpose, technical solutions and advantages of the present application clearer, the present application will be further described in detail below in conjunction with the accompanying drawings. The specific operating methods in the method embodiments can also be applied to apparatus embodiments or system embodiments. It should be noted that in the description of the present application, "multiple" is understood as "at least two". "And/or" describes the association relationship of associated objects, indicating that three relationships may exist. For example, A and/or B can represent: A exists alone, A and B exist at the same time, and B exists alone. A is connected to B, which can represent: A is directly connected to B and A is connected to B through C. In addition, in the description of the present application, words such as "first" and "second" are only aimed to distinguish the description, and cannot be understood as indicating or implying relative importance, nor can they be understood as indicating or implying order.

In order to better understand the embodiments of the present application, the technical terms involved in the embodiments of the present application are first explained below.
(1) An ephemeris refers to a precise position or a trajectory table of a celestial body (e.g., satellite) over time in Global Positioning System (GPS) measurements, and is a function of time.
(2) A divergence angle is a measure of how fast a light beam diverges from the beam waist. It can also be understood as the angle at which light rays from different directions converge to a point or pass through a lens. For example, the larger the divergence angle of a light beam, the faster the light rays converge from different directions, and the more focused the light beam becomes during propagation.
(3) An inter-satellite link (ISL) refers to the link used for communication between satellites.
(4) Free Space Optical Communications refers to the communication technology that uses light waves as carriers to transmit information in a vacuum or atmosphere. It can include atmospheric optical communications, satellite-to-satellite optical communications, and satellite-to-ground optical communications. Compared with microwave technology, free space optical communications have the characteristics of high modulation rate, wide frequency bandwidth, and no occupation of spectrum resources; compared with wired and optical fiber communications, free space optical communications have the advantages of flexibility, low operating cost, and easy promotion.

The following is a brief introduction to the application scenarios to which the technical solutions of the embodiments of the present application can be applied. It should be noted that the application scenarios introduced below are only used to illustrate the embodiments of the present application and are not limited. In specific implementation, the technical solutions provided by the embodiments of the present application can be flexibly applied according to actual needs.

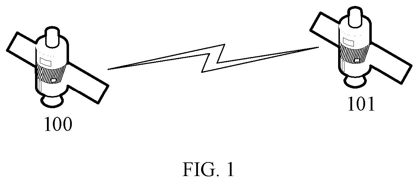

FIG. 1 exemplarily shows a schematic diagram of an application scenario applicable to an embodiment of the present application. As shown in the figure, the application scenario mainly includes: a first satellite 100 and a second satellite 101. The first satellite 100 and the second satellite 101 exchange information through an inter-satellite link (ISL), and the communication mode of the inter-satellite link may include: wired optical (such as optical fiber) communication and wireless optical (such as atmosphere, outer space) communication. It should be noted that the quantity of the satellites is not limited in the embodiment of the present application. As shown in FIG. 1, only the first satellite 100 and the second satellite 101 are used as an example for description.

In some scenarios, the first satellite 100 can be a high-orbit satellite, a medium-orbit satellite, or a low-orbit satellite, etc. Similarly, the second satellite 101 can be a high-orbit satellite, a medium-orbit satellite, or a low-orbit satellite. The embodiments of the present application do not limit this.

In some scenarios, the first satellite 100 and the second satellite 101 are both equipped with the signal light transceiver device, so that the first satellite 100 and the second satellite 101 can both be used as transmitting satellites to transmit their own signal light to the counterpart, and the first satellite 100 and the second satellite 101 can both be used as receiving satellites to receive the signal light transmitted by the counterpart, thereby realizing a scenario in which both satellites simultaneously capture the signal light of the counterpart.

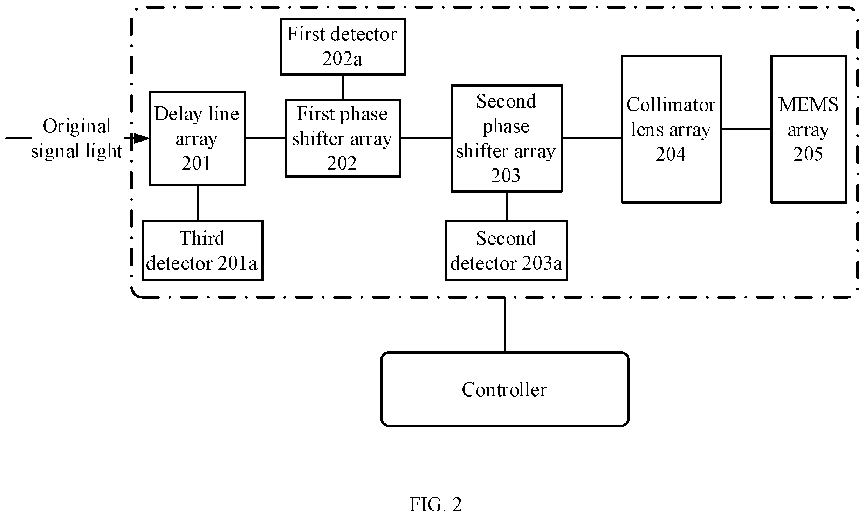

FIG. 2 exemplarily shows a schematic structural diagram of a signal light transceiver device provided in an embodiment of the present application. As shown in FIG. 2, the device includes a delay line array 201, a first phase shifter array 202, a first detector 202a, a second phase shifter array 203, a second detector 203a, a collimator lens array 204, a MEMS array 205, and a third detector 201a, which are respectively connected to the controller; where the delay line array 201, the first phase shifter array 202, the second phase shifter array 203, the collimator lens array 204, and the MEMS array 205 are connected in sequence, the first phase shifter array 202 is connected to the first detector 202a, the second phase shifter array 203 is connected to the second detector 203a, and the delay line array 201 is connected to the third detector 201a. Furthermore, the second phase shifter array 203 is connected to the collimator lens array 204 through a quantity of optical fibers, and the collimator lens array 204 is connected to the MEMS array through free space light. The above arrays and detectors are all controlled by the controller, and may include the following functions respectively.

The control delay line array 201 can ensure the consistency of the delay of the transmitted signal light and the consistency of the delay of the received signal light.

The third detector 201a may convert the received signal light into an electrical signal.

The first detector 202a can detect the optical power of the original signal light to be transmitted, and feed the optical power of the original signal light back to the first phase shifter array 202.

The first phase shifter array 202 can add a random interference signal to the original signal light based on the optical power of the original signal light, so that the optical power of the signal light subsequently transmitted to the counterpart through the MEMS array 205 is evenly distributed, which specifically refers to the uniform distribution of far-field optical power, and the far-field optical power may refer to the optical power of the laser light beam in an area far away from the beam waist (focus).

The second detector 203a can detect the optical power of the received signal light, and feed the optical power of the received signal light back to the second phase shifter array 203.

The second phase shifter array 203 can ensure that the phases of the received signal lights are the same based on the optical power detected by the second detector 203a.

The collimator lens array 204 transmits the signal light to be transmitted to the MEMS array 205 through free space light, and can also couple the received signal light into the optical fiber and transmit it to the second phase shifter array 203.

The MEMS array 205 can transmit the signal light to be transmitted to the counterpart at a certain divergence angle, and can also receive the signal light transmitted by the counterpart at a certain receiving angle of field of view.

In an embodiment of the present application, the satellite can control the divergence angle of the transmitted signal light based on the above signal light transceiver device, so that the area (also called the capture area) formed by the signal light diverging to the counterpart covers the receiving area of the counterpart, thereby reducing the time for the counterpart to capture the signal light of the local end. Furthermore, the receiving angle of field of view of the received signal light can also be controlled, thereby reducing the time to capture the signal light transmitted by the counterpart.

To further illustrate the technical solution provided by the embodiment of the present application, this is described in detail below in conjunction with the accompanying drawings and specific implementation. Although the embodiment of the present application provides the method operation steps as shown in the following embodiments or drawings, more or fewer operation steps may be included in the method based on routine or no creative labor. In the steps where there is no necessary causal relationship logically, the execution order of these steps is not limited to the execution order provided by the embodiment of the present application. The method may be executed or executed in parallel in the actual processing process or when the device is executed in accordance with the method sequence shown in the embodiment or drawings.

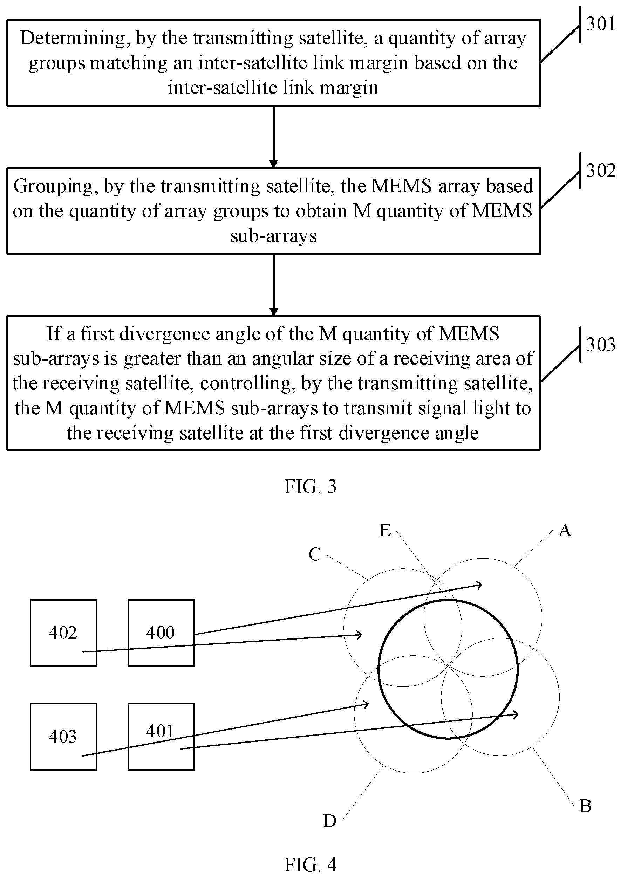

Based on the signal light transceiver device shown in FIG. 2, FIG. 3 exemplarily shows a flow chart of a signal light transmitting method provided in an embodiment of the present application. As shown in FIG. 3, the method includes the following steps.

301: the transmitting satellite determines the quantity of array groups matching the inter-satellite link margin based on the inter-satellite link margin.

In this step, the inter-satellite link margin can represent the link quality between the transmitting satellite (the first satellite 100 as shown in FIG. 1) and the receiving satellite (the second satellite 101 as shown in FIG. 1). Of course, the inter-satellite link margin can also represent the link quality between the transmitting satellite (the second satellite 101 as shown in FIG. 1) and the receiving satellite (the first satellite 100 as shown in FIG. 1).

For example, when the inter-satellite link margin is in the range of (a1, a2) (the smaller the inter-satellite link margin is), the corresponding quantity of array groups is 2; and when the inter-satellite link margin is in the range of (a3, a4), the corresponding quantity of array groups is 4.

It should be noted that the correspondence between the inter-satellite link margin and the quantity of array groups can be pre-configured, or after calculating the current inter-satellite link margin, the appropriate quantity of array groups can be calculated based on the inter-satellite link margin, which is not limited in the embodiments of the present application.

302: the transmitting satellite groups the MEMS array based on the above quantity of array groups to obtain M quantity of MEMS sub-arrays.

Here, M is an integer greater than 1. For example, assuming that the quantity of array groups is 4, the quantity of units of the MEMS array 205 is 4*4, and 4 units can constitute one MEMS sub-array, thereby obtaining 4 MEMS sub-arrays; assuming that the quantity of array groups is 2, the quantity of units of the MEMS array 205 is 4*4, and 8 units can constitute one MEMS sub-array, thereby obtaining 2 MEMS sub-arrays, so that each MEMS sub-array partition can be subsequently controlled to transmit the signal light to the counterpart, thereby further reducing the time for the counterpart to capture the signal light and improving the capture efficiency.

303: if a first divergence angle of the M quantity of MEMS sub-arrays is greater than the angular size of a receiving area of the receiving satellite, the transmitting satellite controls the M quantity of MEMS sub-arrays to transmit the signal light to the receiving satellite at the first divergence angle.

In this step, the receiving area is an area formed by a position of the receiving satellite and an error range of the position. Further, the error range may be caused by the attitude error, ephemeris error, and pointing direction error, etc., of the receiving satellite.

In some embodiments of the present application, the first divergence angle is a divergence angle obtained by expanding the initial divergence angle after the above 4 units constitute one MEMS sub-array. The initial divergence angle is a divergence angle at which the collimator lens array (the collimator lens array 204 as shown in FIG. 2) transmits the signal light to be transmitted to one unit in the MEMS array.

In this step, when the first divergence angle of the M quantity of MEMS sub-arrays is larger than the angular size of the receiving area of the receiving satellite, the signal light can be transmitted to the counterpart in a staring mode, that is, the M quantity of MEMS sub-arrays are controlled to remain stationary to transmit the signal light to the receiving satellite at the first divergence angle. When the signal light reaches the counterpart, the formed area (capture area) can cover the receiving area of the counterpart.

FIG. 4 exemplarily shows a representation diagram of the capture area and the receiving area of the receiving satellite provided in an embodiment of the present application. In FIG. 4, a sub-capture area A represents an area formed at the counterpart after the MEMS sub-array 400 emits the signal light at the first divergence angle to the counterpart; a sub-capture area B represents an area formed at the counterpart after the MEMS sub-array 401 emits the signal light at the first divergence angle to the counterpart; a sub-capture area C represents an area formed at the counterpart after the MEMS sub-array 402 emits the signal light at the first divergence angle to the counterpart; a sub-capture area D represents an area formed at the counterpart after the MEMS sub-array 403 emits the signal light at the first divergence angle to the counterpart; and the above sub-capture areas constitute a capture area that can cover the receiving area E.

In some other embodiments of the present application, when the first divergence angle of the M quantity of MEMS sub-arrays is less than or equal to the angular size of the receiving area of the receiving satellite, the signal light can be transmitted to the counterpart by using a scanning mode, that is, the pointing direction of the M quantity of MEMS sub-arrays is adjusted to obtain a second divergence angle greater than the angular size of the receiving area, and then the M quantity of MEMS sub-arrays are controlled to transmit the signal light to the receiving satellite at the second divergence angle, thereby ensuring that when the signal light reaches the counterpart, the formed area (capture area) can cover the receiving area of the counterpart.

In some other embodiments of the present application, before transmitting the signal light to the receiving satellite, the first phase shifter array 202 shown in FIG. 2 can be controlled to add a random interference signal to the original signal light to obtain the signal light with evenly distributed optical power, so that the signal light can be evenly distributed when it reaches the counterpart, thereby ensuring the reliability of the counterpart detecting the signal light.

In some other embodiments of the present application, in order to further improve the reliability of the counterpart detecting the signal light, when adding the random interference signal to the original signal light, it can be considered that the frequency of the random interference signal is greater than the detection bandwidth set by the detector of the counterpart.

In some other embodiments of the present application, in order to prevent the signal lights transmitted through the MEMS sub-arrays from affecting each other, it can be considered that the random interference signals added to the original signal lights are uncorrelated with each other, or the correlation coefficients are controlled within a set range (e.g., 0.01, 0.02, 0.03, 0.1, etc.).

In some other embodiments of the present application, the first detector may adopt a Charge Coupled Device camera (CCD), and the sensitivity and exposure time of the CCD may be flexibly set based on different quantities of array groups, thereby improving the detection effect of the detector. For example, in the case of 4 MEMS sub-arrays, the frame rate of the CCD is set to 2 thousand frames (k), and the exposure time of the CCD is set to 10 microseconds (µs); in the case of 2 MEMS sub-arrays, the frame rate of the CCD is set to 1 thousand frames, and the exposure time of the CCD is set to 20 microseconds.

In some embodiments of the present application, before transmitting the signal light to the receiving satellite, a direction in which the M quantity of MEMS sub-arrays transmit the signal light is controlled to align with the receiving area based on the satellite ephemeris of the receiving satellite. The satellite ephemeris includes orbital parameters of the receiving satellite, thereby ensuring that the transmitted signal light can accurately reach the receiving area of the counterpart.

In the embodiment of the present application, firstly, the transmitting satellite can determine the quantity of array groups that matches the inter-satellite link margin based on the inter-satellite link margin, and group the MEMS array based on the quantity of array groups to obtain M quantity of MEMS sub-arrays, thereby achieving the purpose of expanding the divergence angle of the transmitted signal light; secondly, when the first divergence angle of the M quantity of MEMS sub-arrays is greater than the angular size of the receiving area of the receiving satellite, the transmitting satellite transmits the signal light to the counterpart (receiving satellite), further ensures that the subsequently transmitted signal light can cover the receiving area of the counterpart, thereby improving the probability and efficiency of the counterpart receiving the signal light.

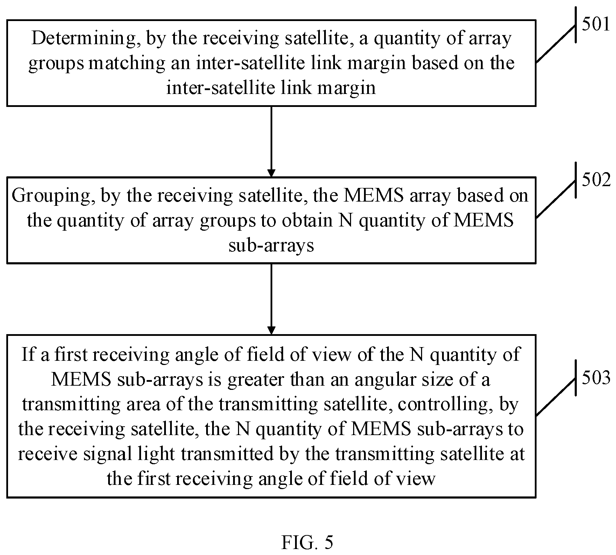

Based on the signal light transceiver device shown in FIG. 2 above, FIG. 5 exemplarily shows a flow chart of a signal light receiving method provided in an embodiment of the present application. As shown in FIG. 5, the process includes the following steps.

501: the receiving satellite determines the quantity of array groups that matches the inter-satellite link margin based on the inter-satellite link margin.

In this step, the inter-satellite link margin can represent the link quality between the transmitting satellite (the first satellite 100 as shown in FIG. 1) and the receiving satellite (the second satellite 101 as shown in FIG. 1). Of course, the inter-satellite link margin can also represent the link quality between the transmitting satellite (the second satellite 101 as shown in FIG. 1) and the receiving satellite (the first satellite 100 as shown in FIG. 1).

For example, when the inter-satellite link margin is in the range of (a1, a2) (the smaller the inter-satellite link margin is), the corresponding quantity of array groups is 2; and when the inter-satellite link margin is in the range of (a3, a4), the corresponding quantity of array groups is 4.

It should be noted that the correspondence between the inter-satellite link margin and the quantity of array groups can be pre-configured, or after calculating the current inter-satellite link margin, the appropriate quantity of array groups can be calculated based on the inter-satellite link margin, which is not limited in the embodiments of the present application.

502: the receiving satellite groups the MEMS array based on the above quantity of array groups to obtain N quantity of MEMS sub-arrays.

N is an integer greater than 1. For example, assuming that the quantity of array groups is 4, the quantity of units of the MEMS array 205 is 4*4, and 4 units can constitute one MEMS sub-array, thereby obtaining 4 MEMS sub-arrays; assuming that the quantity of array groups is 2, the quantity of units of the MEMS array 205 is 4*4, and 8 units can constitute one MEMS sub-array, thereby obtaining 2 MEMS sub-arrays, so that each MEMS sub-array can be subsequently controlled to simultaneously receive the signal light transmitted by the counterpart, thereby improving the efficiency and probability of signal light reception.

503: if the first receiving angle of field of view of the N quantity of MEMS sub-arrays is greater than the angular size of the transmitting area of the transmitting satellite, the receiving satellite controls the N quantity of MEMS sub-arrays to receive the signal light transmitted by the transmitting satellite at the first receiving angle of field of view.

In this step, the transmitting area is an area formed by a position of the transmitting satellite and an error range of the position. Further, the error range may be caused by the attitude error, ephemeris error, and pointing direction error, etc., of the transmitting satellite.

In some embodiments of the present application, the first receiving angle of field of view is a receiving angle of field of view obtained by expanding an initial receiving angle of field of view after the above 8 units form one MEMS sub-array, and the initial receiving angle of field of view is a receiving angle of field of view corresponding to one unit in the MEMS array.

In this step, when the first receiving angle of field of view of the N quantity of MEMS sub-arrays is larger than the angular size of the transmitting area of the transmitting satellite, the N quantity of MEMS sub-arrays can be directly controlled to remain stationary to continuously and quickly receive at the first receiving angle of field of view the signal light transmitted by the transmitting satellite.

In some other embodiments of the present application, when the first receiving angle of field of view of the N quantity of MEMS sub-arrays is less than or equal to the angular size of the transmitting area of the transmitting satellite, the pointing directions of the N quantity of MEMS sub-arrays can be adjusted to obtain a second receiving angle of field of view that is greater than the angular size of the transmitting area, and then the N quantity of MEMS sub-arrays are controlled to receive at the second receiving angle of field of view the signal light transmitted by the transmitting satellite, thereby improving the efficiency and probability of receiving the signal light from the counterpart.

In some other embodiments of the present application, before receiving the signal light transmitted by the transmitting satellite, a direction in which the N quantity of MEMS sub-arrays receive the signal light can be controlled to align with the transmitting area of the counterpart based on the satellite ephemeris of the transmitting satellite, and the satellite ephemeris includes orbital parameters of the transmitting satellite, thereby ensuring accurate reception of the signal light transmitted by the counterpart.

In some other embodiments of the present application, when receiving the signal light transmitted by the satellite, the second detector 203a shown in FIG. 2 can also be controlled to detect the optical power of the signal light, and based on the optical power of the signal light, control phases of the signal lights received by the second phase shifter array 203 being the same to prevent distortion of the signal light, thereby ensuring the accuracy of the received signal light.

In some other embodiments of the present application, the second detector 203a may adopt a Charge Coupled Device camera (CCD), and the sensitivity and exposure time of the CCD may be flexibly set based on different quantities of array groups, thereby improving the detection effect of the detector. For example, in the case of 4 MEMS sub-arrays, the frame rate of the CCD is set to 2 thousand frames (k), and the exposure time of the CCD is set to 10 microseconds (µs); in the case of 2 MEMS sub-arrays, the frame rate of the CCD is set to 1 thousand frames, and the exposure time of the CCD is initially set to 20 microseconds.

Furthermore, after receiving the signal light transmitted by the transmitting satellite, it can also be determined whether the optical power of the signal light received by the first MEMS sub-array among the N quantity of MEMS sub-arrays detected by the second detector 203a meets the set threshold (for example, greater than 50 nanowatts). If so, it indicates that the signal light received by the first MEMS sub-array from the counterpart is strong enough, and the remaining MEMS sub-arrays among the N quantity of MEMS sub-arrays can be controlled to rotate to the same pointing direction as the first MEMS sub-array and receive the signal light transmitted by the transmitting satellite. For example, the control system of the receiving satellite generates one or more control signals (for indicating the MEMS sub-array in the MEMS array to rotate), when each MEMS sub-array in the MEMS array receives the control signal, the micro-lens or micro-mirror of the first MEMS sub-array will rotate to a specific position or specific angle (direction), and at the same time, other MEMS sub-arrays in the MEMS array will also rotate their respective micro-lenses or micro-mirrors to the specific positions or specific angles (directions) to redirect the propagation path of the signal light, so that the MEMS array can more stably receive the signal light transmitted by the counterpart; if not, the N quantity of MEMS sub-arrays are continuously controlled to receive the signal light transmitted by the satellite until the optical power of the signal light meets the set threshold. In some other embodiments of the present application, the optical power of the signal light can be detected based on a set period (for example, every 1s, or every 2s, or every 3s), or the optical power of the signal light can be detected in real time.

In the embodiment of the present application, firstly, the receiving satellite can determine the quantity of array groups that matches the inter-satellite link margin based on the inter-satellite link margin, and group the MEMS array based on the quantity of array groups to obtain N quantity of MEMS sub-arrays, thereby achieving the purpose of expanding the receiving angle of field of view of the received signal light; secondly, when the first receiving angle of field of view of the N quantity of MEMS sub-arrays is greater than the angular size of the transmitting area of the transmitting satellite, receives the signal light transmitted by the counterpart, thereby further improving the probability and efficiency of receiving the signal light.

Based on the methods shown in FIG. 3 and FIG. 5, in the scenario of dual-satellite capture, the first satellite 100 in FIG. 1 adopts a scanning mode or a staring mode based on the relationship between its own divergence angle (or receiving angle of field of view) and the size of the area where the counterpart is located, and the second satellite 101 adopts a scanning mode or a staring mode based on its own divergence angle (or receiving angle of field of view) and the size of the area where the counterpart is located. Therefore, when performing dual-satellite capture, the following dual-satellite capture modes may be included.

Mode 1: when the divergence angle (or receiving angle of field of view) of the first satellite 100 is greater than the angular size of the area where the second satellite 101 is located, and the divergence angle (or receiving angle of field of view) of the second satellite 101 is greater than the angular size of the area where the first satellite 100 is located, both the first satellite 100 and the second satellite 101 use the staring mode to perform dual-satellite capture.

Mode 2: when the divergence angle (or receiving angle of field of view) of the first satellite 100 is less than or equal to the angular size of the area where the second satellite 101 is located, and the divergence angle (or receiving angle of field of view) of the second satellite 101 is greater than the angular size of the area where the first satellite 100 is located, the first satellite 100 adopts the scanning mode and the second satellite 101 adopts the staring mode to perform dual-satellite capture.

Mode 3: when the divergence angle (or receiving angle of field of view) of the first satellite 100 is greater than the angular size of the area where the second satellite 101 is located, and the divergence angle (or receiving angle of field of view) of the second satellite 101 is less than or equal to the angular size of the area where the first satellite 100 is located, the first satellite 100 adopts the staring mode and the second satellite 101 adopts the scanning mode for capture.

Mode 4: when the divergence angle (or receiving angle of field of view) of the first satellite 100 is less than or equal to the angular size of the area where the second satellite 101 is located, and the divergence angle (or receiving angle of field of view) of the second satellite 101 is less than or equal to the angular size of the area where the first satellite 100 is located, both the first satellite 100 and the second satellite 101 are captured using the scanning mode.

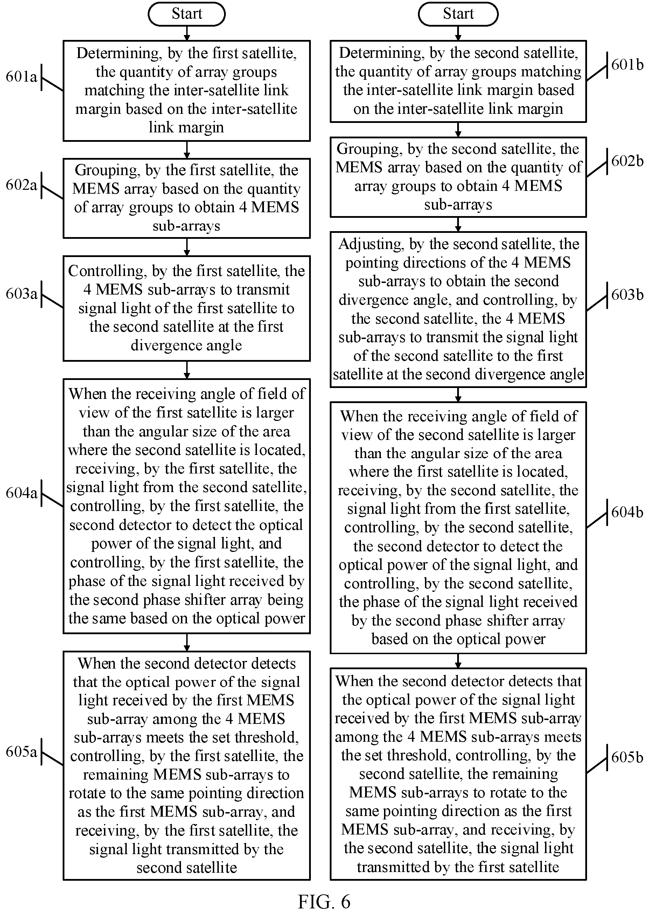

Taking the above mode 3 as an example, FIG. 6 exemplarily shows a logic diagram of a dual-satellite capture provided by an embodiment of the present application. Taking the first satellite 100, the second satellite 101, and the quantity of units of the MEMS array as 4*4 as an example, as shown in FIG. 6, it mainly includes the following processes.

601a: the first satellite determines the quantity of array groups matching the inter-satellite link margin based on the inter-satellite link margin.

This step is similar to step 301 in FIG. 3 or step 501 in FIG. 5, and will not be described again here.

602a: the first satellite groups the MEMS array based on the quantity of array groups to obtain 4 MEMS sub-arrays.

This step is similar to step 302 in FIG. 3 or step 502 in FIG. 5, and will not be described again here.

603a: the first satellite controls the 4 MEMS sub-arrays to transmit signal light of the first satellite to the second satellite at the first divergence angle.

604a: when the receiving angle of field of view of the first satellite is larger than the angular size of the area where the second satellite is located, the first satellite receives the signal light from the second satellite, controls the second detector to detect the optical power of the signal light, and controls phases of the signal lights received by the second phase shifter array being the same based on the optical power.

605a: when the second detector detects that the optical power of the signal light received by the first MEMS sub-array among the 4 MEMS sub-arrays meets the set threshold, the first satellite controls the remaining MEMS sub-arrays to rotate to the same pointing direction as the first MEMS sub-array, and receives the signal light transmitted by the second satellite.

Similarly, 601b: the second satellite determines the quantity of array groups matching the inter-satellite link margin based on the inter-satellite link margin.

This step is similar to step 301 in FIG. 3 or step 501 in FIG. 5, and will not be described again here.

602b: the second satellite groups the MEMS array based on the above quantity of array groups to obtain 4 MEMS sub-arrays.

This step is similar to step 302 in FIG. 3 or step 502 in FIG. 5, and will not be described again here.

603b: the second satellite adjusts the pointing directions of the 4 MEMS sub-arrays to obtain a second divergence angle, and controls the 4 MEMS sub-arrays to transmit its own signal light to the first satellite at the second divergence angle.

604b: when the receiving angle of field of view of the second satellite is larger than the angular size of the area where the first satellite is located, the second satellite receives the signal light from the first satellite, controls the second detector to detect the optical power of the signal light, and controls phases of the signal lights received by the second phase shifter array being the same based on the optical power.

605b: when the second detector detects that the optical power of the signal light received by the first MEMS sub-array among the 4 MEMS sub-arrays meets the set threshold, the second satellite controls the remaining MEMS sub-arrays to rotate to the same pointing direction as the first MEMS sub-array, and receives the signal light transmitted by the first satellite.

In the above process, the first satellite and the second satellite can simultaneously capture the signal light of the counterpart, and under the condition of ensuring that the divergence angle or the receiving angle of field of view is larger than the angular size of the area where the counterpart is located, the probability and efficiency of capture can be improved.

Based on the same technical concept, a signal light transmitting apparatus is also provided in an embodiment of the present application, and the apparatus can implement the process in the above signal light transmitting method in the embodiment of the present application.

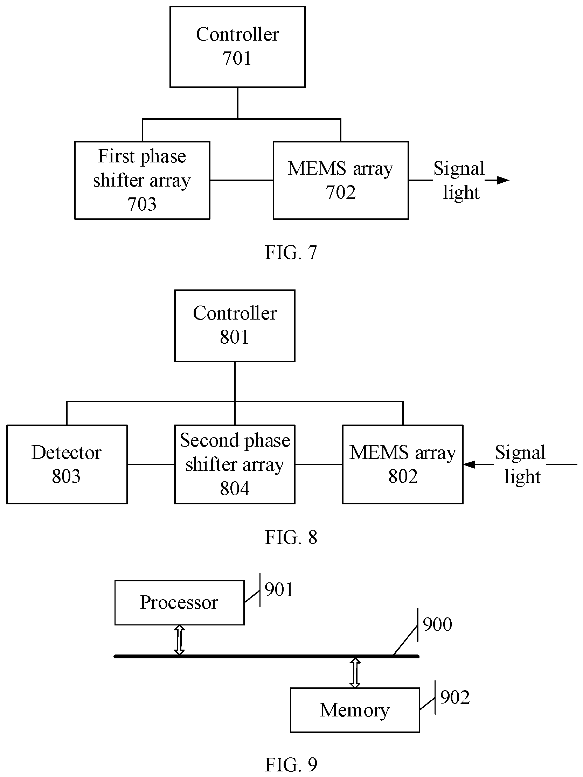

FIG. 7 exemplarily shows a schematic structural diagram of a signal light transmitting apparatus provided in an embodiment of the present application. The apparatus includes a controller 701, a MEMS array 702, and may further include a first phase shifter array 703.

The controller 701 is configured for: determining a quantity of array groups matching the inter-satellite link margin based on an inter-satellite link margin; where the inter-satellite link margin represents a link quality between the transmitting satellite and a receiving satellite; grouping the MEMS array 702 to obtain M quantity of MEMS sub-arrays based on the quantity of array groups, where M is an integer greater than 1; and controlling the M quantity of MEMS sub-arrays to transmit a signal light to the receiving satellite at the first divergence angle in response to that a first divergence angle of the M quantity of MEMS sub-arrays is greater than an angular size of a receiving area of the receiving satellite; where the receiving area is an area formed by a position of the receiving satellite and an error range of the position.

In some embodiments of the present application, the controller 701 is further configured for: adjusting pointing directions of a unit set of the M quantity of MEMS sub-arrays to obtain a second divergence angle of the M quantity of MEMS sub-arrays in response to that the first divergence angle is less than or equal to the angular size of the receiving area; where the second divergence angle is greater than the angular size of the receiving area; and controlling the M quantity of MEMS sub-arrays to transmit a signal light to the receiving satellite at the second divergence angle.

In some embodiments of the present application, the controller 701 is further configured for: controlling the first phase shifter array 702 to add a random interference signal to an original signal light to obtain the signal light; where an optical power of the signal light is evenly distributed.

In some embodiments of the present application, the controller 701 is further configured for: controlling a direction in which the M quantity of MEMS sub-arrays transmit the signal light to align with the receiving area based on a satellite ephemeris of the receiving satellite; where the satellite ephemeris includes orbital parameters of the receiving satellite.

It should be noted here that the above apparatus provided in the embodiment of the present application can implement all the method steps in the above signal light transmitting method of the embodiment, and can achieve the same technical effect. The parts and beneficial effects of this embodiment that are the same as the method of the embodiment will not be described in detail here.

Based on the same technical concept, a signal light receiving apparatus is further provided in an embodiment of the present application, and the apparatus can implement the process in the above signal light receiving method in the embodiment of the present application.

FIG. 8 exemplarily shows a schematic structural diagram of a signal light receiving apparatus provided in an embodiment of the present application. The apparatus includes a controller 801, a MEMS array 802, and may further include a detector 803 and a second phase shifter array 804.

The controller 801 is configured for: determining a quantity of array groups matching the inter-satellite link margin based on an inter-satellite link margin; where the inter-satellite link margin represents a link quality between the receiving satellite and a transmitting satellite; grouping the MEMS array 802 to obtain N quantity of MEMS sub-arrays based on the quantity of array groups, where N is an integer greater than 1; controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; where the transmitting area is an area formed by a position of the transmitting satellite and an error range of the position.

In some embodiments of the present application, the controller 801 is further configured for: adjusting pointing directions of the N quantity of MEMS sub-arrays to obtain a second receiving angle of field of view of the N quantity of MEMS sub-arrays in response to that the first receiving angle of field of view is less than or equal to the angular size of the transmitting area; where the second receiving angle of field of view is greater than the angular size of the transmitting area; and controlling the N quantity of MEMS sub-arrays to receive at the second receiving angle of field of view the signal light transmitted by the transmitting satellite.

In some embodiments of the present application, the controller 801 is further configured for: controlling a direction in which the N quantity of MEMS sub-arrays receive the signal light to align with the transmitting area based on a satellite ephemeris of the transmitting satellite; where the satellite ephemeris includes orbital parameters of the transmitting satellite.

In some embodiments of the present application, the controller 801 is further configured for: controlling the detector 803 to detect an optical power of the signal light; and controlling phases of signal lights received by the second phase shifter array 804 being the same based on the optical power of the signal light.

In some embodiments of the present application, the controller is further configured for: if the detector 803 detects that the optical power of the signal light meets a set threshold, controlling the N quantity of MEMS sub-arrays to stop receiving the signal light transmitted by the transmitting satellite.

It should be noted here that the above apparatus provided in the embodiment of the present application can implement all the method steps in the above signal light receiving method of the embodiment, and can achieve the same technical effect. The parts and beneficial effects of this embodiment that are the same as the method of the embodiment will not be described in detail here.

Based on the same technical concept, a communication apparatus is also provided in an embodiment of the present application, and the communication apparatus can realize the functions of the apparatus shown in the aforementioned FIG. 7 or FIG. 8.

FIG. 9 exemplarily shows a schematic structural diagram of a communication apparatus provided in an embodiment of the present application.

The communication apparatus includes at least one processor 901, and a memory 902 connected to at least one processor 901. The specific connection medium between the processor 901 and the memory 902 is not limited in the embodiment of the present application. FIG. 9 takes the connection between the processor 901 and the memory 902 through the bus 900 as an example. The bus 900 is represented by a bold line in FIG. 9, and the connection between other components is only for schematic illustration and is not intended to be limiting. The bus 900 can be divided into an address bus, a data bus, a control bus, etc. For ease of representation, only one bold line is used in FIG. 9, but it does not mean that there is only one bus or one type of bus. Alternatively, the processor 901 can also be called a controller, and there is no restriction on the name.

In the embodiment of the present application, the memory 902 stores instructions that can be executed by at least one processor 901. The at least one processor 901 can execute the signal light transmitting method discussed in FIG. 3 or the signal light receiving method discussed in FIG. 5 by executing the instructions stored in the memory 902. The processor 901 can implement the functions of each module in the apparatus shown in FIG. 7 or FIG. 8.

The processor 901 is the control center of the apparatus, and can use various interfaces and lines to connect various parts of the entire control device. By running or executing instructions stored in memory 902 and calling data stored in memory 902, various functions and processing data of the apparatus can be performed, the apparatus can be monitored as a whole.

In one possible design, the processor 901 may include one or more processing units, and the processor 901 may integrate an application processor and a modem processor, where the application processor mainly processes an operating system, a user interface, and application programs, and the modem processor mainly processes wireless communications. It can be understood that the modem processor may not be integrated into the processor 901. In some embodiments, the processor 901 and the memory 902 may be implemented on the same chip, and in some embodiments, they may also be implemented separately on separate chips.

The processor 901 may be a general-purpose processor, such as a central processing unit (CPU), a digital signal processor, an application-specific integrated circuit, a field programmable gate array or other programmable logic device, a discrete gate or transistor logic device, or a discrete hardware component, and may implement or execute the methods, steps, and logic block diagrams disclosed in the embodiments of the present application. The general-purpose processor may be a microprocessor or any conventional processor, etc. The steps of a signal light capture method disclosed in the embodiments of the present application may be directly embodied as being executed by a hardware processor, or may be executed by a combination of hardware and software modules in the processor.

The memory 902 is a non-volatile computer-readable storage medium that can be used to store non-volatile software programs, non-volatile computer executable programs and modules. The memory 902 may include at least one type of storage medium, such as a flash memory, a hard disk, a multimedia card, a card-type memory, a random access memory (RAM), a static random access memory (SRAM), a programmable read-only memory (PROM), a read-only memory (ROM), an electrically erasable programmable read-only memory (EEPROM), a magnetic memory, a disk, an optical disk, etc. The memory 902 is any other medium that can be used to carry or store a desired program code in the form of an instruction or data structure and can be accessed by a computer, but is not limited thereto. The memory 902 in the embodiment of the present application can also be a circuit or any other apparatus that can realize a storage function, for storing program instructions and/or data.

By designing and programming the processor 901, the code corresponding to a signal light transmitting method or a signal light receiving method introduced in the above embodiment can be fixed into the chip, so that the chip can execute the signal light transmitting method of the embodiment shown in FIG. 3 or the signal light receiving method of the embodiment shown in FIG. 5 when running. How to design and program the processor 901 is a technology well known to those skilled in the art and will not be described in detail here.

It should be noted here that the above communication apparatus provided in the embodiment of the present application can implement all the method steps implemented in the above method embodiment, and can achieve the same technical effect. The parts and beneficial effects that are the same as the method embodiment in this embodiment will not be described in detail here.

An embodiment of the present application further provides a computer-readable storage medium, which stores computer-executable instructions, and the computer-executable instructions are used to enable a computer to execute the signal light transmitting method or the signal light receiving method in the above embodiments.

An embodiment of the present application further provides a computer program product. When the computer program product is called by a computer, the computer executes the signal light transmitting method or the signal light receiving method in the above embodiment.

Those skilled in the art will appreciate that the embodiments of the present application may be provided as methods, systems, or computer program products. Therefore, the present application may adopt the form of a complete hardware embodiment, a complete software embodiment, or an embodiment in combination with software and hardware. Moreover, the present application may adopt the form of a computer program product implemented in one or more computer-usable storage media (including but not limited to disk storage, CD-ROM, optical storage, etc.) that include computer-usable program code.

The present application is described with reference to the flowchart and/or block diagram of the method, device (system), and computer program product according to the present application. It should be understood that each process and/or block in the flowchart and/or block diagram, as well as the combination of the process and/or block in the flowchart and/or block diagram can be implemented by computer program instructions. These computer program instructions can be provided to a processor of a general-purpose computer, a special-purpose computer, an embedded processor or other programmable data processing device to produce a machine, so that the instructions executed by the processor of the computer or other programmable data processing device produce an apparatus for implementing the function specified in one process or multiple processes in the flowchart and/or one block or multiple blocks in the block diagram.

These computer program instructions may also be stored in a computer-readable memory that can direct a computer or other programmable data processing device to work in a specific manner, so that the instructions stored in the computer-readable memory produce a manufactured product including an instruction apparatus that implements the functions specified in one or more processes in the flowchart and/or one or more blocks in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

## Claims

1. A signal light transmitting method, comprising:
determining, by a transmitting satellite, a quantity of array groups matching the inter-satellite link margin based on an inter-satellite link margin; wherein the inter-satellite link margin represents a link quality between the transmitting satellite and a receiving satellite;
grouping a micro-electromechanical system (MEMS) array to obtain M quantity of MEMS sub-arrays based on the quantity of array groups, wherein M is an integer greater than 1; and
controlling the M quantity of MEMS sub-arrays to transmit a signal light to the receiving satellite at the first divergence angle in response to that a first divergence angle of the M quantity of MEMS sub-arrays is greater than an angular size of a receiving area of the receiving satellite; wherein the receiving area is an area formed by a position of the receiving satellite and an error range of the position.

2. The method according to claim 1, further comprising:
adjusting pointing directions of the M quantity of MEMS sub-arrays to obtain a second divergence angle of the M quantity of MEMS sub-arrays in response to that the first divergence angle is less than or equal to the angular size of the receiving area; wherein the second divergence angle is greater than the angular size of the receiving area; and
controlling the M quantity of MEMS sub-arrays to transmit a signal light to the receiving satellite at the second divergence angle.

3. The method according to claim 1 or 2, further comprising: before transmitting the signal light to the receiving satellite,
controlling a first phase shifter array to add a random interference signal to an original signal light to obtain the signal light; wherein an optical power of the signal light is evenly distributed.

4. The method according to claim 1 or 2, further comprising: before transmitting the signal light to the receiving satellite,
controlling a direction in which the M quantity of MEMS sub-arrays transmit the signal light to align with the receiving area based on a satellite ephemeris of the receiving satellite; wherein the satellite ephemeris comprises orbital parameters of the receiving satellite.

5. A signal light receiving method, comprising:
determining, by a receiving satellite, a quantity of array groups matching the inter-satellite link margin based on an inter-satellite link margin; wherein the inter-satellite link margin represents a link quality between the receiving satellite and a transmitting satellite;
grouping a micro-electromechanical system (MEMS) array to obtain N quantity of MEMS sub-arrays based on the quantity of array groups, wherein N is an integer greater than 1; and
controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; wherein the transmitting area is an area formed by a position of the transmitting satellite and an error range of the position.

6. The method according to claim 5, further comprising:
adjusting pointing directions of the N quantity of MEMS sub-arrays to obtain a second receiving angle of field of view of the N quantity of MEMS sub-arrays in response to that the first receiving angle of field of view is less than or equal to the angular size of the transmitting area; wherein the second receiving angle of field of view is greater than the angular size of the transmitting area; and
controlling the N quantity of MEMS sub-arrays to receive at the second receiving angle of field of view the signal light transmitted by the transmitting satellite.

7. The method according to claim 5 or 6, further comprising: before receiving the signal light transmitted by the transmitting satellite,
controlling a direction in which the N quantity of MEMS sub-arrays receive the signal light to align with the transmitting area based on a satellite ephemeris of the transmitting satellite; wherein the satellite ephemeris comprises orbital parameters of the transmitting satellite.

8. The method according to claim 6, wherein receiving the signal light transmitted by the transmitting satellite comprises:
controlling a detector to detect an optical power of the signal light; and
controlling phases of signal lights received by a second phase shifter array being the same based on the optical power of the signal light.

9. The method according to claim 8, further comprising: after receiving the signal light transmitted by the transmitting satellite,
controlling remaining MEMS sub-arrays among the N quantity of MEMS sub-arrays to rotate to the same pointing direction as the first MEMS sub-array in response to that the detector detects that an optical power of the signal light received by a first MEMS sub-array among the N quantity of MEMS sub-arrays meets a set threshold, and receiving the signal light transmitted by the transmitting satellite.

10. A signal light transmitting apparatus, comprising a controller and a micro-electromechanical system (MEMS) array connected to the controller; wherein the controller is configured for:
determining a quantity of array groups matching the inter-satellite link margin; wherein the inter-satellite link margin represents a link quality between the transmitting satellite and a receiving satellite based on an inter-satellite link margin;
grouping the MEMS array to obtain M quantity of MEMS sub-arrays based on the quantity of array groups, wherein M is an integer greater than 1; and
controlling the M quantity of MEMS sub-arrays to transmit a signal light to the receiving satellite at the first divergence angle in response to that a first divergence angle of the M quantity of MEMS sub-arrays is greater than an angular size of a receiving area of the receiving satellite; wherein the receiving area is an area formed by a position of the receiving satellite and an error range of the position.

11. The apparatus according to claim 10, wherein the controller is further configured for:
adjusting pointing directions of a unit set of the M quantity of MEMS sub-arrays to obtain a second divergence angle of the M quantity of MEMS sub-arrays in response to that the first divergence angle is less than or equal to the angular size of the receiving area; wherein the second divergence angle is greater than the angular size of the receiving area; and
controlling the M quantity of MEMS sub-arrays to transmit a signal light to the receiving satellite at the second divergence angle.

12. The apparatus according to claim 10 or 11, further comprising: a first phase shifter array; wherein the controller is further configured for:
controlling the first phase shifter array to add a random interference signal to an original signal light to obtain the signal light; wherein an optical power of the signal light is evenly distributed.

13. The apparatus according to claim 10 or 11, wherein the controller is further configured for:
controlling a direction in which the M quantity of MEMS sub-arrays transmit the signal light to align with the receiving area based on a satellite ephemeris of the receiving satellite; wherein the satellite ephemeris comprises orbital parameters of the receiving satellite.

14. A signal light receiving apparatus, comprising a controller and a micro-electromechanical system (MEMS) array unit connected to the controller; wherein the controller is configured for:
determining a quantity of array groups matching the inter-satellite link margin based on an inter-satellite link margin; wherein the inter-satellite link margin represents a link quality between the receiving satellite and a transmitting satellite;
grouping the MEMS array to obtain N quantity of MEMS sub-arrays based on the quantity of array groups, wherein N is an integer greater than 1;
controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; wherein the transmitting area is an area formed by a position of the transmitting satellite and an error range of the position.

15. The apparatus according to claim 14, wherein the controller is further configured for:
adjusting pointing directions of the N quantity of MEMS sub-arrays to obtain a second receiving angle of field of view of the N quantity of MEMS sub-arrays in response to that the first receiving angle of field of view is less than or equal to the angular size of the transmitting area; wherein the second receiving angle of field of view is greater than the angular size of the transmitting area; and
controlling the N quantity of MEMS sub-arrays to receive at the second receiving angle of field of view the signal light transmitted by the transmitting satellite.

16. The apparatus according to claim 14 or 15, wherein the controller is further configured for:
controlling a direction in which the N quantity of MEMS sub-arrays receive the signal light to align with the transmitting area based on a satellite ephemeris of the transmitting satellite; wherein the satellite ephemeris comprises orbital parameters of the transmitting satellite.

17. The apparatus according to claim 15, further comprising: a detector and a second phase shifter array; wherein the controller is further configured for:
controlling the detector to detect an optical power of the signal light; and
controlling phases of signal lights received by the second phase shifter array being the same based on the optical power of the signal light.

18. The apparatus according to claim 17, wherein the controller is further configured for:
controlling remaining MEMS sub-arrays among the N quantity of MEMS sub-arrays to rotate to the same pointing direction as the first MEMS sub-array in response to that the detector detects that an optical power of the signal light received by a first MEMS sub-array among the N quantity of MEMS sub-arrays meets a set threshold, and receiving the signal light transmitted by the transmitting satellite.

19. A signal light transceiver device, comprising a delay line array, a first phase shifter array, a first detector, a second phase shifter array, a second detector, a collimator mirror array, a micro-electromechanical system (MEMS) array, and a third detector each connected to a controller; wherein the delay line array, the first phase shifter array, the second phase shifter array, the collimator mirror array, and the MEMS array are connected in sequence, the first phase shifter array is connected to the first detector, the second phase shifter array is connected to the second detector, and the delay line array is connected to the third detector; and the controller is configured for:
determining a quantity of array groups matching the inter-satellite link margin; wherein the inter-satellite link margin represents a link quality between a transmitting satellite and a receiving satellite based on an inter-satellite link margin;
grouping the MEMS array to obtain M quantity of MEMS sub-arrays based on the quantity of array groups, wherein M is an integer greater than 1; and
controlling the M quantity of MEMS sub-arrays to transmit a signal light to the receiving satellite at the first divergence angle in response to that a first divergence angle of the M quantity of MEMS sub-arrays is greater than an angular size of a receiving area of the receiving satellite; wherein the receiving area is an area formed by a position of the receiving satellite and an error range of the position of the receiving satellite.

20. The device according to claim 19, wherein the controller is further configured for:
determining the quantity of array groups matching the inter-satellite link margin based on the inter-satellite link margin; wherein the inter-satellite link margin represents the link quality between the receiving satellite and the transmitting satellite;
grouping the MEMS array to obtain N quantity of MEMS sub-arrays based on the quantity of array groups, wherein N is an integer greater than 1;
controlling the N quantity of MEMS sub-arrays to receive at the first receiving angle of field of view a signal light transmitted by the transmitting satellite in response to that a first receiving angle of field of view of the N quantity of MEMS sub-arrays is greater than an angular size of a transmitting area of the transmitting satellite; wherein the transmitting area is an area formed by a position of the transmitting satellite and an error range of the position of the transmitting satellite.

21. The device according to claim 19, wherein the controller is further configured for:
controlling the first phase shifter array to add a random interference signal to an original signal light to obtain the signal light; wherein an optical power of the signal light is evenly distributed.

22. A communication apparatus, comprising:
a memory, configured to store computer programs; and
a processor, configured to perform steps of the method according to any one of claims 1 to 4 or claims 5 to 9 when executing the computer programs stored in the memory.

23. A computer-readable storage medium, storing computer programs, wherein when the computer programs are executed by a processor, steps in the method according to any one of claims 1 to 4 or claims 5 to 9 are performed.
